# EUROPEAN PATENT SPECIFICATION

(11) **EP 2 528 204 B1**
(45) Date of publication and mention of the grant of the patent: **27.12.2017**
(21) Application number: 11167870.2
(22) Date of filing: 27.05.2011
(51) Int. Cl.: H02K 11/01, H02K 17/16

(54) **Solid squirrel-cage rotor for an induction machine and manufacturing method thereof**
Solider Kurzschlussläufer für Induktionsmaschinen und Herstellungsverfahren dafür
Rotor à cage d'écureuil solide pour machine à induction et son procédé de fabrication

(43) Date of publication of application: 28.11.2012
(73) Proprietor: ABB Schweiz AG, 5400 Baden (CH)
(72) Inventor: Liu, Yujing, 722 10 Västerås (SE); Tholence, Frédéric, 723 48 Västerås (SE); Lethagen, Jan-Eric, 724 71 Västerås (SE); Chen, Wenliang, 722 18 Västerås (SE)
(74) Representative: Savela, Reino Aleksi

(56) References cited:
- EP-A1- 0 638 983
- EP-A2- 0 265 868
- WO-A2-2010/100214
- CN-U- 201 750 313
- DE-C- 656 938
- DE-C1- 19 741 200
- GB-A- 130 014
- US-A- 5 001 380
- BUSSE D F ET AL: "AN EVALUATION OF THE ELECTRONIC SHIELDED INDUCTION MOTOR: A SOLUTION FOR ROTOR SHAFT VOLTAGE BUILDUP AND BEARING CURRENT", IEEE TRANSACTIONS ON INDUSTRY APPLICATIONS, IEEE SERVICE CENTER, PISCATAWAY, NJ, US, vol. 33, no. 6, 1 November 1997 (1997-11-01), pages 1563-1570, XP000765729, ISSN: 0093-9994, DOI: 10.1109/28.649969

## Description

### TECHNICAL FIELD OF THE INVENTION

The present invention generally relates to solid squirrel-cage rotors for induction machines.

Particularly, the invention relates to an improved design for such solid squirrel-cage rotor to thereby reduce harmonic losses from frequency converter drives. The invention relates also to a manufacturing method for such rotor.

### DESCRIPTION OF RELATED ART AND BACKGROUND OF THE INVENTION

Solid rotor induction machines are usually used for high speed rotating applications because of the mechanical robustness. A rotor of such machine comprises typically a cylindrical solid rotor body made of steel. The rotor body comprises a number of axially extending slots e.g. equiangularly arranged around the circumference of the rotor body. Copper rods are arranged in the slots in a close fit and are shortcircuited at the axial ends of the rotor by copper rings to thereby define the squirrel-cage structure. The squirrel-cage structure provides a good balance in electrical aspect and magnetic aspect. Therefore it has clear advantages on power factor and efficiency over other solid rotor structures without the squirrel-cage. Typically, the copper rods are bonded to the rotor body in a HIP (hot isostatic pressing) procedure in which the rotor is arranged within a steel capsule and is exposed to high pressure and high temperature, thereby forming a strong diffusion bonding layer between the steel and the copper materials that are in contact with one another.

A disadvantage of such rotor structure, however, is the high surface losses due to harmonic currents from a frequency converter which is used for driving the high speed induction machine. The voltage waveforms of the high speed converters have high fundamental frequency and are therefore usually far from sinusoidal. This is especially remarkable for high power converters, where the maximum device switching frequency is limited. If this voltage with high content of harmonics is directly applied to the terminals of a solid rotor machine, the losses due to eddy currents on the rotor surface will be considerably high. The losses increase quadratically with the harmonic currents measured as THDi (Total Harmonic Distortion of current).

US5001380 discloses a motor wherein a solid ferromagnetic rotor core without a squirrel-cage structure is provided with a screen in order to increase the starting torque of the motor (see US5001380, col. 1, lines 52-55). The screen in US5001380 improves the conductivity of the rotor, thereby resulting in an increased current and consequently a higher torque. The screen layer needs to be relatively thick in order to improve the conductivity. In a squirrel cage rotor, on the other hand, a high conductivity of the rotor is ensured through axial (copper) bars of the squirrel cage. Therefore, from the starting torque point of view the screen of US5001380 has the same function as the axial bars of a squirrel cage rotor, namely to improve the conductivity in the axial direction of the rotor. Applying the screen according to US5001380 on a squirrel cage motor would not result to an increased starting torque, or at least such an increase would not be expected. On the contrary, since the axial bars of a squirrel cage rotor are often made on pure copper, applying the screen according to US5001380 on a squirrel cage motor would merely be expected to worsen the conductivity and consequently lead to a decreased starting torque.

WO2010/100214 and CN201750313U disclose rotors for an electric motor, the rotors comprising a metallic corrosion protection layer enveloping a metal core and electrical conductors.

### SUMMARY OF THE INVENTION

It is therefore an object of the present invention to provide a solid squirrel-cage rotor for an induction machine, which lacks the above disclosed disadvantage when being operated at high speed and high power.

It is a further object of the invention to provide such rotor, which is simple, robust, reliable, and of low cost.

It is still a further object of the invention to provide a manufacturing method of a solid squirrel-cage rotor for an induction machine, which fulfills the above objects.

It is yet a further object of the invention to provide such manufacturing method, which is simple, reliable, of low cost, easy to implement, and which adds a minimum of further process steps to an existing manufacturing method for manufacturing a prior art solid squirrel-cage rotor.

These objects, among others, are according to the present invention, attained by rotors and manufacturing methods as claimed in the appended claims.

According to a first aspect of the invention there is provided a solid squirrel-cage rotor for an induction machine comprising a cylindrical solid rotor body including a number of axially extending slots arranged in the rotor body, electrically conductive bars arranged in the slots in a close fit; and electrically conductive members at the axial ends of the rotor body, which short-circuit the electrically conductive bars, thus forming the squirrel-cage structure of the rotor. An electrically conductive shielding layer is arranged on the cylindrical surface of the rotor body and on any exposed portions of the electrically conductive bars to shield the rotor body and the electrically conductive bars from any harmonic electric fields present outside the rotor. The resistivity of the electrically conductive shielding layer material is less than 10 x 10⁻⁸ Ωm, preferably less than 2 x 10⁻⁸ Ωm, at 20 °C in order to obtain the desired functionality.

Preferably, the electrically conductive bars, and optionally the electrically conductive shielding layer, are bonded to the rotor body in a HIP (high isostatic pressing) process. Hereby, very strong diffusion bonding layers in the interfaces between the electrically conductive bars and the rotor body, and optionally between the electrically conductive shielding layer and the rotor body, are obtained.

The slots may be arranged in the surface of the rotor body, e.g. equiangularly arranged around the circumference thereof, or as through holes within the rotor body.

The rotor is advantageously designed for high speed and optionally high power applications. Hence, during operation, the peripheral speed of the rotor is about 100 m/s or higher, the rotational speed of the rotor is about 6000 rpm or higher, and optionally the power of the induction machine, for which the rotor is provided, is about 1, 5, or 10 MW or higher.

It shall be appreciated that the electrically conductive bars of the squirrel-cage rotor are used to conduct the main rotor current to generate torque. The electrically conductive shielding layer will just protect the electrically conductive bars and the rotor body from harmonic fields present in the air gap between the rotor and the stator of the induction machine. To this end, the dimension of the electrically conductive bars in a radial direction is much bigger than the thickness of the electrically conductive shielding layer. Typically, the radial dimension of the electrically conductive bars is at least about 10 times bigger, and preferably at least about 20 times bigger, than the thickness of the electrically conductive shielding layer.

According to a second aspect of the invention there is provided a manufacturing method of a solid squirrel-cage rotor for an induction machine, according to which a cylindrical solid rotor body is provided in which a number of axially extending slots are arranged in the rotor body. The electrically conductive bars are arranged in the slots in a close fit and electrically conductive members are arranged at the axial ends of the rotor body to short-circuit the electrically conductive bars. An electrically conductive shielding layer is arranged on the cylindrical surface of the rotor body and on exposed portions of the electrically conductive bars, if there are any, to shield the rotor body and the electrically conductive bars from any harmonic electric fields present outside the rotor.

Typically, the electrically conductive bars are bonded to the rotor body in a HIP (hot isostatic pressing) process, whereby diffusion bonding layers in the interfaces between the electrically conductive bars and the rotor body are formed. The electrically conductive shielding layer can be manufactured in a variety of processes.

In one embodiment, the electrically conductive shielding layer is bonded to the rotor body in the HIP process, whereby diffusion bonding layers in the interfaces between the electrically conductive bars and the rotor body are formed. The HIP process includes either to arrange the rotor body, the electrically conductive bars, and the electrically conductive shielding layer within a steel capsule and to expose them for high pressure and high temperature, after which the steel capsule is removed, or to expose the rotor body, the electrically conductive bars, and the electrically conductive shielding layer for high pressure and high temperature without using the temporary steel capsule.

In another embodiment the electrically conductive shielding layer is applied on the on the cylindrical surface of the rotor body and on any exposed portions of the electrically conductive bars by means of spraying.

Further characteristics of the invention and advantages thereof will be evident from the following detailed description of embodiments of the invention.

### BRIEF DESCRIPTION OF THE DRAWINGS

The present invention will become more fully understood from the detailed description of embodiments of the present invention given herein below and the accompanying Figs. 1-3, which are given by way of illustration only, and thus are not limitative of the present invention.
Fig. 1 displays schematically in a radial cross-section a solid squirrel-cage rotor for an induction machine according to an embodiment of the invention.
Fig. 2 displays schematically in a radial cross-section a solid squirrel-cage rotor for an induction machine during manufacture according to an embodiment of the invention.
Fig. 3 displays schematically in a radial cross-section a solid squirrel-cage rotor for an induction machine during manufacture according to a further embodiment of the invention.

### DETAILED DESCRIPTION OF EMBODIMENTS

In the following description, for purposes of explanation and not limitation, specific details are set forth, such as particular techniques and applications in order to provide a thorough understanding of the present invention. However, it will be apparent to one skilled in the art that the present invention may be practiced in other embodiments that depart from these specific details. In other instances, detailed descriptions of well-known techniques are omitted so as not to obscure the description of the present invention with unnecessary details.

The present invention relates to a high-speed solid squirrel-cage rotor for an electrical rotating induction machine. The electrical rotating induction machine comprises also a stator (not illustrated) arranged around the rotor with an air gap there in-between. The stator may comprise a plurality of stator plates stacked in the axial direction and stator windings. However, the stator may have various structures as readily known by a person skilled in the art. The stator will therefore not be further elaborated in this text.

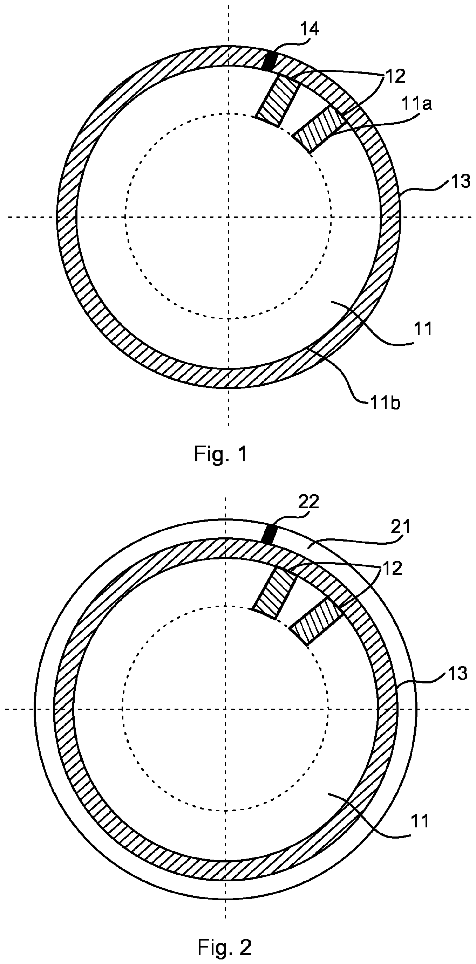

The rotor as shown in Fig. 1 comprises a cylindrical solid rotor core or body 11 including a number of axially extending slots 11a around the circumference 11b of the rotor body 11 and electrically conductive bars 12 arranged in the slots 11a in a close fit. Preferably, but not necessarily, the slots 11a are arranged equiangularly around the circumference of the rotor body 11. Note that, Fig. 1 only shows two of the electrically conductive bars 12 of the rotor for reasons of simplicity. The rotor body 11 is preferably made of a magnetically soft material having high magnetic permeability and a relatively low electric conductivity, such as e.g. steel, while the conductive bars 12 are low in the magnetic permeability and relatively high in the electric conductivity, such as e.g. copper or a copper based alloy. The rotor body 11 and the conductive bars 12 are integrated with each other and the entire surface forms a smooth cylindrical surface. The peripheral speed of the rotor can be about 100 m/s or higher or the rotational speed of the rotor can be about 6000 rpm or higher.

In the axial ends, the rotor may be provided with electrically conductive members or rings (not illustrated), e.g. copper rings, thereby short-circuiting the electrically conductive bars 12. Hereby the squirrel-cage structure of the rotor is formed.

Further, an electrically conductive shielding layer 13 is arranged on the cylindrical surface of the rotor body 11 and on any exposed portions of the electrically conductive bars 12 to shield the rotor body 11 and the electrically conductive bars 12 from any harmonic electric fields present outside the rotor, e.g. in the air gap between the rotor and the stator, as caused by e.g. a frequency converter for driving the rotating induction machine. The resistivity of the material of the electrically conductive shielding layer 13 is preferably less than 10 x 10⁻⁸ Ωm, and most preferably less than 2 x 10⁻⁸ Ωm, at 20 °C, in order to obtain the best shielding functionality.

Further, the electrically conductive shielding layer 13 is advantageously continuous and covers an entire operative surface of the rotor (rotor body 11 and electrically conductive bars 12). Typically, the layer is about 0.5-2 mm thick and is made of copper or a copper alloy. Preferably, the electrically conductive bars 12 and the electrically conductive shielding layer 13 are of the same material.

The problem with high surface losses due to current harmonics is particularly severe for high power induction machines such as those with a power of about 1, 5, or 10 MW or higher. For such machines the present invention is particularly useful. It has been shown that the harmonic losses can be reduced to 20%.

The invention allows for the use of converters presently manufactured by Applicant for high speed and high power drives. The invention renders it unnecessary or at least less necessary to (i) use three-phase filters or reactors between the frequency converter and the induction machine, (ii) derate the converter and increase switching frequency to get a better shaped waveform, and (iii) to use multilevel converters to ensure achievement of a sinusoidal waveform.

The electrically conductive bars 12 are arranged to conduct the main rotor current to generate torque whereas the electrically conductive shielding layer 13 will merely serve as a protecting shielding layer. Therefore, the dimension of the electrically conductive bars 12 in a radial direction is at least about 10 times bigger, and preferably at least about 20 times bigger, than the thickness of the electrically conductive shielding layer.

The electrically conductive bars 12 and optionally the electrically conductive shielding layer 13 are preferably attached to the rotor body 11 by means of metallurgical bonding. Advantageously, in each of the interfaces between the electrically conductive bars 12 and optionally the electrically conductive shielding layer 13 and the rotor body 11 there is formed a diffusion bonding layer comprising e.g. steel and copper and additionally an additive material. How such layers can be formed will be disclosed below.

The invention refers also to an electrical rotating induction machine comprising the rotor as disclosed above and a stator.

Simulations show that rotor time harmonic losses caused by converter harmonics (2200 Hz) can be reduced by up to 80% for THDi of 0.153.

A manufacturing method of the solid squirrel-cage rotor according to a first embodiment will be described with reference to Fig. 1. The cylindrical solid rotor body with a number of axially extending slots 11a in the rotor body is formed and the electrically conductive bars 12 are placed in the slots 11a in a close fit. At the axial ends of the rotor body 11 the electrically conductive bars 12 are connected to one another by electrically conductive members. The electrically conductive shielding layer 13 is arranged on the cylindrical surface of the rotor body 11 and on the exposed portions of the electrically conductive bars 12. Typically, the electrically conductive shielding layer 13 is provided as a rectangular sheet which is wrapped around the cylindrical surface such that its end sides meet one another. These are welded together by an axially extending welding joint 14. In this manner the electrically conductive shielding layer 13 resembles a capsule used in a HIP (hot isostatic pressing) process, wherein diffusion bonding layers in the interfaces between the electrically conductive bars 12 and the rotor body and in the interfaces between the electrically conductive shielding layer 13 and the rotor body 11 are formed, and thus no customary steel capsule is used. The above structure is exposed to high pressure and high temperature to form the diffusion bonding layers. In this embodiment the electrically conductive bars 12 and the electrically conductive shielding layer 13 are attached to the rotor body in the same process step. The provision of a separate temporary steel capsule during the HIP process is avoided. In principle, this manufacturing method is not more complex than a prior art manufacturing method without the electrically conductive shielding layer 13.

A manufacturing method of the solid squirrel-cage rotor according to a second embodiment will be described with reference to Fig. 2. This method differs from the one disclosed with reference to fig. 1 in that the electrically conductive shielding layer 13 is not closed by a welding joint. Instead a separate capsule 21, preferably made of stainless steel is arranged around the rotor and is closed by a welding joint 22 during the HIP process, after which the capsule 21 is removed. Also in this embodiment the electrically conductive bars 12 and the electrically conductive shielding layer 13 are attached to the rotor body in the same process step. The provision of a separate temporary steel capsule during the HIP process is made as in the prior art method, but the difference is here that also the electrically conductive shielding layer 13 is attached/bonded to the rotor body in the same HIP process. In principle, this manufacturing method requires only one additional process step as compared to the prior art manufacturing method; i.e. the arranging of the electrically conductive shielding layer 13 at the rotor.

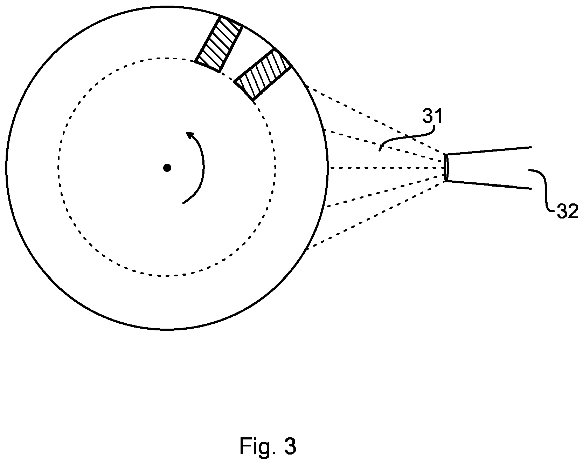

Finally, a manufacturing method of the solid squirrel-cage rotor according to a third embodiment will be described with reference to Fig. 3. In this embodiment the electrically conductive bars 12 are bonded to the rotor body 11 in a prior art HIP process by aid of a separate temporary capsule being arranged around the rotor. After having removed the capsule, the electrically conductive shielding layer is applied onto the cylindrical surface of the rotor body 11 and on any exposed portions of the electrically conductive bars 12 by means of applying a spray 31 from a spray nozzle 32 while the rotor is rotated in a separate process step. This embodiment differs from the previous ones in that the electrically conductive bars 12 are bonded to the rotor body 11 before the electrically conductive shielding layer 13 is applied. The attachment of the electrically conductive shielding layer 13 is advantageously obtained during spraying, but optionally the application of the electrically conductive shielding layer 13 will be followed by a further attachment step. This embodiment may be slightly more complex than the previous ones in that it requires more process steps.

It shall be appreciated that the rotor may be manufactured by yet different methods such as e.g. explosion welding or electroplating.

Note that while also each of Figs. 1 and 2 only shows two of the electrically conductive bars 12 of the rotor for reasons of simplicity, the electrically conductive bars 12 can be provided in a greater number e.g. arranged equiangularly around the circumference of the rotor body 11.

It shall also be appreciated that the slots can be provided as a number of through holes drilled in the rotor body in an axial direction around a center axis of the rotor body 11. In such embodiment the electrically conductive bars 12 are embedded within the rotor body 11 and have no exposed surfaces to be covered by the conductive shielding layer 13. The conductive shielding layer 13 is, as above, covering the operational surface of the rotor body 11.

It will be obvious that the invention may be varied in a plurality of ways. Such variations are not to be regarded as a departure from the scope of the invention. All such modifications as would be obvious to one skilled in the art are intended to be included within the scope of the appended claims.

## Claims

1. A solid squirrel-cage rotor for an induction machine comprising:
- a cylindrical solid rotor body (11) including a number of axially extending slots (11a) arranged in the rotor body;
- electrically conductive bars (12) arranged in the slots in a close fit; and
- electrically conductive members at the axial ends of the rotor body short-circuiting the electrically conductive bars, thus forming the squirrel-cage structure of the rotor, **characterized in:**
- an electrically conductive shielding layer (13) arranged on the cylindrical surface of the rotor body and on any exposed portions of the electrically conductive bars to shield the rotor body and the electrically conductive bars from any harmonic electric fields present outside the rotor, wherein
- the resistivity of the electrically conductive shielding layer material is less than 10 x 10⁻⁸ Ωm, preferably less than 2 x 10⁻⁸ Ωm, at 20 °C.

2. The rotor of claim 1 wherein the slots are arranged in the surface of the rotor body around the circumference (11b) thereof.

3. The rotor of claim 1 wherein the slots are arranged as through holes within the rotor body.

4. The rotor of any of claims 1-3 wherein the solid squirrel-cage rotor comprises diffusion bonding layers in the interfaces between the electrically conductive bars and the rotor body which bond the electrically conductive bars to the rotor body.

5. The rotor of claim 4 wherein the diffusion bonding layers are HIP (high isostatic pressing) process layers.

6. The rotor of any of claims 1-5 wherein the solid squirrel-cage rotor comprises diffusion bonding layers, preferably HIP process layers, in the interfaces between the electrically conductive shielding layer and the rotor body which bond the electrically conductive shielding layer to the rotor body.

7. The rotor of any of claims 1-6 wherein the peripheral speed of the rotor is about 100 m/s or higher, the rotational speed of the rotor is about 6000 rpm or higher, and/or the power of the induction machine is about 1 MW or higher, preferably 5 MW or higher, or more preferably 10 MW or higher.

8. The rotor of any of claims 1-7 wherein the dimension of the electrically conductive bars in a radial direction is at least about 10 times bigger, and preferably at least about 20 times bigger, than the thickness of the electrically conductive shielding layer.

9. The rotor of any of claims 1-8 wherein the electrically conductive shielding layer is continuous and covers an entire operative surface of the rotor.

10. The rotor of any of claims 1-9 wherein the electrically conductive shielding layer is made of copper or an alloy containing copper.

11. An electric induction machine comprising the rotor of any of claims 1-10.

12. A method of manufacturing a solid squirrel-cage rotor for an induction machine, comprising the steps of:
- providing a cylindrical solid rotor body (11) including a number of axially extending slots (11a) in the rotor body;
- arranging electrically conductive bars (12) in the slots in a close fit; and
- providing electrically conductive members at the axial ends of the rotor body to short-circuit the electrically conductive bars, **characterized by** the step of:
- providing an electrically conductive shielding layer (13) on the cylindrical surface of the rotor body and on any exposed portions of the electrically conductive bars to shield the rotor body and the electrically conductive bars from any harmonic electric fields present outside the rotor wherein
- the resistivity of the electrically conductive shielding layer material is less than 10 x 10⁻⁸ Ωm, preferably less than 2 x 10⁻⁸ Ωm, at 20 °C.

13. The method of claim 12 wherein the electrically conductive bars are bonded to the rotor body in a HIP (hot isostatic pressing) process, whereby diffusion bonding layers in the interfaces between the electrically conductive bars and the rotor body are formed.

14. The method of claim 13 wherein the electrically conductive shielding layer is bonded to the rotor body in said HIP (hot isostatic pressing) process, whereby diffusion bonding layers in the interfaces between the electrically conductive bars and the rotor body are formed.

15. The method of claim 14 wherein the HIP process includes arranging the rotor body, the electrically conductive bars, and the electrically conductive shielding layer within a steel capsule (21) and exposing them for high isostatic pressure and high temperature, after which the steel capsule is removed.

16. The method of claim 14 wherein the HIP process includes exposing the rotor body, the electrically conductive bars, and the electrically conductive shielding layer for high isostatic pressure and high temperature without using any temporary capsule.

17. The method of claim 12 or 13 wherein the electrically conductive shielding layer is applied on the cylindrical surface of the rotor body and on any exposed portions of the electrically conductive bars by means of applying a spray (31) from a spray nozzle (32).

18. The method of any of claims 12-17 wherein the rotor is manufactured to obtain a peripheral speed of about 100 m/s or higher, a rotational speed of about 6000 rpm or higher, and/or a power of about 1, 5, or 10 MW or higher during operation.

## Patentansprüche

1. Solider Kurzschlussläufer für eine Induktionsmaschine, umfassend:
- einen zylindrischen soliden Läuferkörper (11), der eine Anzahl sich axial erstreckender Schlitze (11a) einschließt, die in dem Läuferkörper angeordnet sind;
- elektrisch leitende Stäbe (12), die eng anliegend in den Schlitzen angeordnet sind; und
- elektrisch leitende Elemente an den axialen Enden des Läuferkörpers, welche die elektrisch leitenden Stäbe kurzschließen, wodurch die Kurzschlussstruktur des Läufers gebildet wird, **gekennzeichnet durch**:
- eine elektrisch leitende Abschirmschicht (13), die auf der zylindrischen Oberfläche des Läuferkörpers und auf jedweden freiliegenden Abschnitten der elektrisch leitenden Stäbe angeordnet ist, um den Läuferkörper und die elektrisch leitenden Stäbe vor jedweden harmonischen elektrischen Feldern abzuschirmen, die außerhalb des Läufers vorhanden sind, wobei
- der spezifische Widerstand des elektrisch leitenden Abschirmschichtmaterials kleiner als 10 x 10⁻⁸ Ωm, vorzugsweise kleiner als 2 x 10⁻⁸ Ωm, bei 20 °C ist.

2. Läufer nach Anspruch 1, wobei die Schlitze in der Oberfläche des Läuferkörpers um dessen Umfang (11b) herum angeordnet sind.

3. Läufer nach Anspruch 1, wobei die Schlitze als durchgehende Löcher innerhalb des Läuferkörpers angeordnet sind.

4. Läufer nach einem der Ansprüche 1 bis 3, wobei der solide Kurzschlussläufer Diffusionsbindungsschichten in den Grenzflächen zwischen den elektrisch leitenden Stäben und dem Läuferkörper umfasst, die die elektrisch leitenden Stäbe an den Läuferkörper binden.

5. Läufer nach Anspruch 4, wobei die Diffusionsbindungsschichten HIP- (hohes isostatisches Pressen)-Prozessschichten sind.

6. Läufer nach einem der Ansprüche 1 bis 5, wobei der solide Kurzschlussläufer Diffusionsbindungsschichten, vorzugsweise HIP-Prozessschichten, in den Grenzflächen zwischen der elektrisch leitenden Abschirmschicht und dem Läuferkörper umfasst, die die elektrisch leitende Abschirmschicht an den Läuferkörper binden.

7. Läufer nach einem der Ansprüche 1 bis 6, wobei die Umfangsgeschwindigkeit des Läufers etwa 100 m/s oder höher ist, die Rotationsgeschwindigkeit des Läufers etwa 6000 UpM oder höher ist, und/oder die Leistung der Induktionsmaschine etwa 1 MW oder höher, vorzugsweise 5 MW oder höher oder bevorzugter 10 MW oder höher ist.

8. Läufer nach einem der Ansprüche 1 bis 7, wobei die Abmessung der elektrisch leitenden Stäbe in einer Radialrichtung mindestens etwa 10 Mal größer und vorzugsweise mindestens etwa 20 Mal größer als die Dicke der elektrisch leitenden Abschirmschicht ist.

9. Läufer nach einem der Ansprüche 1 bis 8, wobei die elektrisch leitende Abschirmschicht kontinuierlich ist und eine gesamte Arbeitsoberfläche des Läufers bedeckt.

10. Läufer nach einem der Ansprüche 1 bis 9, wobei die elektrisch leitende Abschirmschicht aus Kupfer oder einer kupferhaltigen Legierung gefertigt ist.

11. Elektrische Induktionsmaschine, die den Läufer gemäß einem der Ansprüche 1 bis 10 umfasst.

12. Verfahren zur Herstellung eines soliden Kurzschlussläufers für eine Induktionsmaschine, umfassend die Schritte:
- Bereitstellen eines zylindrischen soliden Läuferkörpers (11), der eine Anzahl sich axial erstreckender Schlitze (11a) in dem Läuferkörper einschließt;
- Anordnen von elektrisch leitenden Stäben (12) eng anliegend in den Schlitzen; und
- Bereitstellen von elektrisch leitenden Elementen an den axialen Enden des Läuferkörpers, um die elektrisch leitenden Stäbe kurzzuschließen, **gekennzeichnet durch** den Schritt:
- Bereitstellen einer elektrisch leitenden Abschirmschicht (13) auf der zylindrischen Oberfläche des Läuferkörpers und auf jedweden freiliegenden Abschnitten der elektrisch leitenden Stäbe, um den Läuferkörper und die elektrisch leitenden Stäbe vor jedweden harmonischen elektrischen Feldern abzuschirmen, die außerhalb des Läufers vorhanden sind, wobei
- der spezifische Widerstand des elektrisch leitenden Abschirmschichtmaterials kleiner als 10 x 10⁻⁸ Ωm, vorzugsweise kleiner als 2 x 10⁻⁸ Ωm, bei 20 °C ist.

13. Verfahren nach Anspruch 12, wobei die elektrisch leitenden Stäbe in einem HIP-(heißisostatischen Press)-Prozess an den Läuferkörper gebunden werden, wodurch Diffusionsbindungsschichten in den Grenzflächen zwischen den elektrisch leitenden Stäben und dem Läuferkörper gebildet werden.

14. Verfahren nach Anspruch 13, wobei die elektrisch leitende Abschirmschicht in einem HIP-(heißisostatischen Press)-Prozess an den Läuferkörper gebunden wird, wodurch Diffusionsbindungsschichten in den Grenzflächen zwischen den elektrisch leitenden Stäben und dem Läuferkörper gebildet werden.

15. Verfahren nach Anspruch 14, wobei der HIP-Prozess Anordnen des Läuferkörpers, der elektrisch leitenden Stäbe und der elektrisch leitenden Abschirmschicht in einer Stahlkapsel (21) und Einwirken von hohem isostatischem Druck und hoher Temperatur auf dieselben einschließt, wonach die Stahlkapsel entfernt wird.

16. Verfahren nach Anspruch 14, wobei der HIP-Prozess Einwirken von hohem isostatischem Druck und hoher Temperatur auf den Läuferkörper, die elektrisch leitenden Stäbe und die elektrisch leitende Abschirmschicht einschließt, ohne dass irgendeine temporäre Kapsel verwendet wird.

17. Verfahren nach Anspruch 12 oder 13, wobei die elektrisch leitende Abschirmschicht auf die zylindrische Oberfläche des Läuferkörpers und auf jedwede freiliegenden Abschnitte der elektrisch leitenden Stäbe aufgebracht wird, indem ein Spray (31) aus einer Sprühdüse (32) aufgebracht wird.

18. Verfahren nach einem der Ansprüche 12 bis 17, wobei der Läufer hergestellt wird, um eine Umfangsgeschwindigkeit von etwa 100 m/s oder höher, eine Rotationsgeschwindigkeit von etwa 6000 UpM oder höher und/oder eine Leistung von etwa 1, 5 oder 10 MW oder höher während des Betriebs zu erhalten.

## Revendications

1. Rotor plein à cage d'écureuil pour une machine à induction comprenant :
- un corps de rotor cylindrique plein (11) comportant un nombre de fentes s'étendant axialement (11a) disposées dans le corps de rotor ;
- des barres électriquement conductrices (12) disposées dans les fentes en un ajustement serré ; et
- des éléments électriquement conducteurs aux extrémités axiales du corps de rotor court-circuitant les barres électriquement conductrices, formant ainsi la structure de cage d'écureuil du rotor, **caractérisé par** :
- une couche de blindage électriquement conductrice (13) disposée sur la surface cylindrique du corps de rotor et sur toutes les parties exposées des barres électriquement conductrices pour protéger le corps de rotor et les barres électriquement conductrices de tous les champs électriques harmoniques présents à l'extérieur du rotor, dans lequel
- la résistivité du matériau de la couche de blindage électriquement conductrice est inférieure à 10 x 10⁻⁸ Ωm, de préférence inférieure à 2 x 10⁻⁸ Ωm, à 20 °C.

2. Rotor de la revendication 1 dans lequel les fentes sont disposées dans la surface du corps de rotor autour de la circonférence (11b) de celui-ci.

3. Rotor de la revendication 1 dans lequel les fentes sont disposées comme des trous traversants à l'intérieur du corps de rotor.

4. Rotor de l'une quelconque des revendications 1 à 3, le rotor plein à cage d'écureuil comprenant des couches de soudage par diffusion dans les interfaces entre les barres électriquement conductrices et le corps de rotor qui soudent les barres électriquement conductrices au corps de rotor.

5. Rotor de la revendication 4 dans lequel les couches de soudage par diffusion sont des couches de procédé HIP (pressage isostatique à chaud).

6. Rotor de l'une quelconque des revendications 1 à 5, le rotor plein à cage d'écureuil comprenant des couches de soudage par diffusion, de préférence des couches de procédé HIP, dans les interfaces entre les barres électriquement conductrices et le corps de rotor qui soudent les barres électriquement conductrices au corps de rotor.

7. Rotor de l'une quelconque des revendications 1 à 6, la vitesse périphérique du rotor étant d'environ 100 m/s ou plus, la vitesse de rotation du rotor étant d'environ 6000 tr/min ou plus, et/ou la puissance de la machine à induction étant d'environ 1 MW ou plus, de préférence 5 MW ou plus, ou mieux encore 10 MW ou plus.

8. Rotor de l'une quelconque des revendications 1 à 7 dans lequel la dimension des barres électriquement conductrices dans une direction radiale est au moins environ 10 fois plus grande, et de préférence au moins environ 20 fois plus grande, que l'épaisseur de la couche de blindage électriquement conductrice.

9. Rotor de l'une quelconque des revendications 1 à 8 dans lequel la couche de blindage électriquement conductrice est continue et recouvre une surface fonctionnelle entière du rotor.

10. Rotor de l'une quelconque des revendications 1 à 9 dans lequel la couche de blindage électriquement conductrice est constituée de cuivre ou d'un alliage contenant du cuivre.

11. Machine électrique à induction comprenant le rotor de l'une quelconque des revendications 1 à 10.

12. Procédé de fabrication d'un rotor plein à cage d'écureuil pour une machine à induction, comprenant les étapes consistant à :
- se procurer un corps de rotor cylindrique plein (11) comportant un nombre de fentes s'étendant axialement (11a) dans le corps de rotor ;
- disposer des barres électriquement conductrices (12) dans les fentes en un ajustement serré ; et
- apposer des éléments électriquement conducteurs aux extrémités axiales du corps de rotor pour court-circuiter les barres électriquement conductrices, **caractérisé par** l'étape consistant à
- apposer une couche de blindage électriquement conductrice (13) sur la surface cylindrique du corps de rotor et sur toutes les parties exposées des barres électriquement conductrices pour protéger le corps de rotor et les barres électriquement conductrices de tous les champs électriques harmoniques présents à l'extérieur du rotor, dans lequel
- la résistivité du matériau de la couche de blindage électriquement conductrice est inférieure à 10 x 10⁻⁸ Ωm, de préférence inférieure à 2 x 10⁻⁸ Ωm, à 20 °C.

13. Procédé de la revendication 12 dans lequel les barres électriquement conductrices sont soudées au corps de rotor dans un procédé HIP (pressage isostatique à chaud), moyennant quoi des couches de soudage par diffusion sont formées dans les interfaces entre les barres électriquement conductrices et le corps de rotor.

14. Procédé de la revendication 13 dans lequel la couche de blindage électriquement conductrice est soudée au corps de rotor dans ledit procédé HIP (pressage isostatique à chaud), moyennant quoi des couches de soudage par diffusion sont formées dans les interfaces entre les barres électriquement conductrices et le corps de rotor.

15. Procédé de la revendication 14 dans lequel le procédé HIP comporte les étapes consistant à disposer le corps de rotor, les barres électriquement conductrices et la couche de blindage électriquement conductrice à l'intérieur d'une capsule en acier (21) et les exposer à une pression isostatique à chaud et à haute température, après quoi la capsule en acier est retirée.

16. Procédé de la revendication 14 dans lequel le procédé HIP comporte l'étape consistant à exposer le corps de rotor, les barres électriquement conductrices et la couche de blindage électriquement conductrice à une pression isostatique à chaud et à haute température sans utiliser aucune capsule temporaire.

17. Procédé de la revendication 12 ou 13 dans lequel la couche de blindage électriquement conductrice est appliquée sur la surface cylindrique du corps de rotor et sur toutes les parties exposées des barres électriquement conductrices au moyen de l'application d'un jet (31) à partir d'une buse de pulvérisation (32) .

18. Procédé de l'une quelconque des revendications 12 à 17 dans lequel le rotor est fabriqué pour obtenir une vitesse périphérique d'environ 100 m/s ou plus, une vitesse de rotation d'environ 6000 tr/min ou plus, et/ou une puissance d'environ 1, 5 ou 10 MW ou plus en fonctionnement.
